(19)

Europäisches
Patentamt
European
Patent Office
Office européen
des brevets

(11) **EP 2 196 152 A1**

(12) **EUROPEAN PATENT APPLICATION**
published in accordance with Art. 153(4) EPC

(43) Date of publication:
**16.06.2010 Bulletin 2010/24**

(51) Int Cl.:
***A61B 8/08*** *(2006.01)*

(21) Application number: **08722307.9**

(22) Date of filing: **17.03.2008**

(86) International application number:
**PCT/JP2008/054913**

(87) International publication number:
**WO 2009/034729 (19.03.2009 Gazette 2009/12)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **14.09.2007 JP 2007239198**

(71) Applicant: **Gifu University**
**Gifu-shi**
**Gifu 501-1193 (JP)**

(72) Inventors:
• **YOKOTA, Yasunari**
**Gifu-shi**
**Gifu 501-1193 (JP)**

• **NOGATA, Fumio**
**Gifu-shi**
**Gifu 501-1193 (JP)**
• **KAWAMURA, Yoko**
**Gifu-shi**
**Gifu 501-1193 (JP)**

(74) Representative: **Neuefeind, Regina**
**Maiwald Patentanwalts GmbH**
**Elisenhof**
**Elisenstrasse 3**
**80335 München (DE)**

(54) **IMAGE PROCESSING DEVICE, IMAGE PROCESSING PROGRAM, RECORDING MEDIUM, AND ULTRASONIC DIAGNOSTIC EQUIPMENT**

(57)    An image processing device acquires an ultrasound B-mode image sequence and creates an evaluation function of a mode of the longitudinal sectional shape of the carotid artery rendered in a frame following the frame that has already been modeled, thereby optimizing the evaluation function. The image processing device estimates and models the position and shape of the longitudinal sectional shape of the carotid artery for the following frame based on the optimization result, and performs the same for the subsequent frames. The image processing device outputs a variation of the carotid artery diameter in response to heartbeats based on the modeling result.

Fig.2

EP 2 196 152 A1

**Description**

TECHNICAL FIELD

The present invention relates to an image processing device, an image processing program, a storage medium, and ultrasonic diagnostic equipment, and particularly to an image processing device, an image processing program, a storage medium, and ultrasonic diagnostic equipment for ultrasound images of a carotid artery.

BACKGROUND ART

Arteriosclerosis is one of the lifestyle-related diseases for which unhealthy living habits are risk factors, and which progress without any subjective symptoms from younger ages. If arteriosclerosis is left untreated, it may develop into a brain infarction, cardiac infarction, angina pectoris, or the like. Since arteriosclerosis is difficult to cure, it is important to find early signs of arteriosclerosis and encourage the patient to improve his/her living habits thereby retarding the progress of the disease.

Among examinations for arteriosclerosis, an ultrasonic echo examination has been gaining a foothold as a vital examination technique in modern clinical diagnosis since it allows for noninvasive and direct observation of blood vessels. In an ultrasonic echo examination for arteriosclerosis, an evaluation is made based on the presence or absence of fat contents, which have adhered to the inside of a blood vessel, called plaque, and an intima-media complex thickness (IMT). However, since there is no plaque, and also the IMT is small and difficult to be measured in early stages of arteriosclerosis, detecting early signs by such morphological observation is difficult.

As contrasted with this, there is an idea that such evaluation is possible by evaluating the ease of artery movement in response to heartbeats since arteriosclerosis literally means that the artery has hardened thereby losing resilience. In contrast to morphological measurements such as Plaque and IMT measurements, the aid of computer is inevitable when performing a quantitative measurement of the movement of the artery.

Conventionally, as computer aided diagnosis in carotid artery ultrasonic-echo examination, technologies described in Non-Patent Documents 1 to 4 have been proposed.

In Non-Patent Document 1, in an ultrasound B-mode image, it is assumed that a large number of maximum values of the absolute value of echo intensity gradient are distributed along the borders of the carotid artery, and the borders exhibit smooth curves. Candidate points for the maximum points of luminance gradient are derived by smoothing differentiation and the borders are detected by use of a projection operator.

In Non-Patent Document 2, as an improvement of the technology described in Non-Patent Document 1, the detection of borders is performed in such a way that coefficients of a polynomial for approximating the borders, and a basis of Legendre polynomials are used. Further, in order to increase the likelihood detected candidate points being within a border, the strength of likelihood of being a border is incorporated into the error term of the Gauss-Markov estimation.

In Non-Patent Document 3, a method is proposed that, in an ultrasound B mode image, estimates the boundary between the blood vessel lumen and the blood vessel intima in a carotid artery posterior wall at an accuracy of about 0.1 (mm). This method uses an ultrasound orthogonal demodulated signal. Further, the depth from the skin and the position of the ultrasound beam are modeled, and a mean-square-error between the model and the actual measurements is defined as a cost function to minimize that function.

In Non-Patent Document 4, a method is proposed and put into practical use, in which after one point of a carotid artery wall is manually designated on a B-mode image, the movement of the designated carotid artery wall is tracked at an accuracy of 10 μm by use of an RF signal. Since the method described in Non-Patent Document 4 uses an RF signal, the method can be used only on some ultrasonic diagnostic equipment. However, it is inferred that this method has the highest accuracy at the present time.

Patent Document 1 describes the elastic modulus.

Patent Document 1: Japanese Patent No. 3882084

Non-Patent Document 1: Koya Y., Mizoshiri I., Matsui K., and Nakamura T., "Stiffness Measurement of Carotid Artery (in Japanese)," IEEJ (The Institute of Electrical Engineers of Japan) Transactions C, Vol. 123(10): pp. 1728-1734, 2003.

Non-Patent Document 2: Koya Y., Mizoshiri I., "Border Detection of Common Carotid Artery Using Gauss-Markov estimation (in Japanese)," IEEJ (The institute of Electrical Engineers of Japan) Transactions C, Vol. 124(10), pp. 2051-2056, 2004.

Non-Patent Document 3: Hasegawa H., Kanai H., Koiwa Y., "Detection of Lumen-Intima Interface of Posterior Wall for Measurement of Elasticity of the Human Carotid Artery," IEEE Transactions on UFFC, Vol.51 (1):pp.93-108, 2004.

Non-Patent Document 4: Harada A, "Measurement of Arteriosclerosis Indicator by Echo-tracking Method (in Japanese)," Japanese Journal of Medical Ultrasound Technology, Vol. 28(3): pp. 29-35, 2003.

DISCLOSURE OF THE INVENTION

The methods described in Non-Patent Documents 1 to 3 are those for estimating the carotid artery wall, and do not provide an estimation for the shape and position of the entire carotid artery that includes the anterior wall, lumen, and posterior wall. There exist muscles, tendons, venous walls, and the like that have similar shapes to that of the carotid artery wall in ultrasound images, and therefore there is a high probability that these are erroneously estimated as well as estimation of the carotid artery wall itself. Further, these methodologies are intended for a static view of ultrasound images and are not intended for tracking the movement of the carotid artery in a moving image. Therefore, the same processing needs to be repeated by the number of frames in a moving image, which is not efficient.

The method described in Non-Patent Document 4 is advantageous from the aspect of accuracy in the tracking of the movement of the carotid artery since an RF signal is used. However, ultrasonic diagnostic equipment that can output RF signals are limited to only some models of such equipment and therefore the method according to Non-Patent Document 4 cannot be regarded as being in common use and lacks versatility at the present time.

It is an objective of the present invention to provide an image processing device that can avoid erroneous estimates in which muscles, tendons, and veins that have similar shapes to that of the carotid artery wall are mistaken as part of the carotid artery wall, and can efficiently estimate the shape of the entire carotid artery by modeling the shape thereof, and which can use an ultrasound B-mode image sequence thereby allowing the acquisition of images from ultrasonic diagnostic equipment in widespread use and is therefore versatile, and ultrasonic diagnostic equipment equipped with the aforementioned image processing device. In the present application, the entire carotid artery as herein described includes the anterior wall and posterior wall of the carotid artery, and the lumen located between the walls. Moreover, a wall proximate to the skin, to which the probe is brought into contact at the time of the measurement of the carotid artery by the probe of ultrasonic diagnostic equipment, in the carotid artery walls is referred to as an anterior wall, and the wall spaced apart from the skin is referred to as a posterior wall.

It is another objective of the present invention to provide an image processing program that can avoid erroneous estimates in which muscles, tendons, and veins that have similar shapes to that of the carotid artery wall are mistaken for the carotid artery wall, and can efficiently estimate the shape of the entire carotid artery, and which can use an ultrasound B-mode image sequence allowing the acquisition of images from ultrasonic diagnostic equipment in widespread use and is therefore versatile, and a storage medium that stores the aforementioned program.

In order to solve the above-described problems, according to one aspect of the present invention, an image processing device including first modeling means and output means is provided. The first modeling means acquires an ultrasound B-mode image sequence made up of successive frames, and successively models a longitudinal sectional shape of a carotid artery rendered in each frame with a model having carotid artery parameters that represent a position and shape of the carotid artery. The output means outputs a variation of a carotid artery diameter in response to heartbeats based on the result of the modeling. The first modeling means creates an evaluation function for the model of the longitudinal sectional shape of the carotid artery rendered in a frame following the frame that has already been modeled, thereby optimizing the evaluation function. Then, based on the optimization result, the first modeling means estimates and models the position and shape of the longitudinal sectional shape of the carotid artery of the following frame, and performs the aforementioned operations for the subsequent frames as well.

According to this configuration, by modeling the shape of the entire carotid artery, it is made possible to avoid erroneous estimation in which muscles, tendons, and veins that have similar shapes to that of the carotid artery wall are mistaken for the carotid artery wall, and also to efficiently estimate the shape of the entire carotid artery. Further, since an ultrasound B-mode image sequence can be used, it is possible to acquire images from medical ultrasonic diagnostic equipment in widespread use. Therefore, the image processing device has high versatility.

Preferably the image processing device further includes storage means and second modeling means. The storage means stores initial value data that are obtained by applying a cluster analysis to and modeling longitudinal sectional shapes of the carotid artery relating to a plurality of subjects. The second modeling means, upon acquiring an ultrasound B-mode image sequence made up of successive frames, creates an evaluation function of the model of longitudinal sectional shape of the carotid artery that is rendered in a first frame, thereby optimizing the evaluation function based on the initial value data. Then, the second modeling means estimates and models the position and shape of the longitudinal sectional shape of the carotid artery for the first frame based on the optimization result.

According to this configuration, for the first frame of a moving image, an evaluation function is created based on initial value data. As the number of subjects increases, several different models are obtained as the initial value data through a cluster analysis. For this reason, if the evaluation function is optimized by the second modeling means based on those initial value data, it can be expected that one of them will converge to a true carotid artery position thus allowing the performance of efficient modeling for the first frame.

According to a further aspect of the present invention, an image processing program is provided. The image processing program causes a computer to function as first modeling means and output means. When acquiring an ultrasound B-mode image sequence made up of successive frames and successively modeling the longitudinal sectional shape of the carotid artery rendered in each frame with a model having carotid artery parameters that represent the position and shape of the carotid artery, the first modeling means creates an evaluation function of the model of the longitudinal sectional shape of the carotid artery to be rendered in a following frame after the frame that has already been modeled, thereby optimizing the evaluation function. Then, the first modeling means, based on the optimization result, estimates and models the position and shape of the longitudinal sectional shape of the carotid artery for the following frame, and performs the aforementioned operations for the frames that follow as well. The output means outputs a variation of the carotid artery diameter in response to heartbeats based on the result of modeling.

According to this configuration, it is possible to avoid erroneous estimation in which muscles, tendons, and veins that have similar shapes to that of carotid artery wall are mistaken for the carotid artery wall, and also to efficiently estimate the shape of the entire carotid artery. Further, since an ultrasound B-mode image sequence can be used, it is possible to acquire images from medical ultrasonic diagnostic equipment in widespread use. Therefore, the image processing program has high versatility.

Preferably, the image processing program causes the computer to further function as storage means and second modeling means. The storage means stores the initial value data that are obtained by applying a cluster analysis to and modeling longitudinal sectional shapes of the carotid artery relating to a plurality of subjects. Upon acquiring an ultrasound B-mode image sequence made up of successive frames, the second modeling means creates an evaluation function of the model of the longitudinal sectional shape of the carotid artery rendered in a first frame and optimizes the evaluation function based on the initial value data. Then, the second modeling means estimates and models the position and shape of the longitudinal sectional shape of the carotid artery for the above-described first frame based on the optimization result.

According to this configuration, for the first frame of a moving image, an evaluation function is created based on initial value data. As the number of subjects increases, several different models are obtained as the initial value data through a cluster analysis. For this reason, if the evaluation function is optimized by the second modeling means based on those initial value data, it can be expected that one of them will converge to a true carotid artery position thus allowing the efficient performance in modeling for the first frame.

According to a further aspect of the present invention, a storage medium that stores the above-described image processing program is provided. According to this configuration, it is possible to avoid erroneous estimation in which muscles, tendons, and veins that have similar shapes to that of the carotid artery wall are mistaken for the carotid artery wall, and also to efficiently estimate the shape of the entire carotid artery. Further, since an ultrasound B-mode image sequence can be used, it is possible to acquire images from medical ultrasonic diagnostic equipment in widespread use. Therefore, the storage medium records an image processing program that has high versatility.

According to a further aspect of the present invention, ultrasonic diagnostic equipment is provided. The ultrasonic diagnostic equipment, which is connected to the above-described image processing device, creates an ultrasound B-mode image sequence measured from a living body based on the echo signal obtained by the ultrasound transmission/reception of a probe, and outputs the ultrasound B-mode image sequence to the image processing device. According to this configuration, the ultrasonic diagnostic equipment provides the advantages of the image processing device described above.

BRIEF DESCRIPTION OF THE DRAWINGS

Fig. 1 is a schematic diagram showing an image processing device according to one embodiment of the present invention;
Fig. 2 is a schematic electric block diagram showing the image processing device;
Fig. 3 is a conceptual diagram showing the processing to be executed by the image processing device;
Fig. 4 shows an ultrasound B-mode image;
Fig. 5 shows an example of the estimation of carotid artery parameters in an ultrasound B-mode image;
Fig. 6 is a graph showing a distribution of the number of samples that have converged to a true value from initial value data;
Fig. 7 shows a weighting function $w(x, y; \theta)$;
Fig. 8 shows initial value data;
Fig. 9 shows, by a line graph, the variation of the diameter of the carotid artery of a 20-year-old male in response to heartbeats;
Fig. 10 shows, by a line graph, the variation in the diameter of the carotid artery of a 60-year-old male in response to heartbeats; and
Fig. 11 is a graph showing the relationship between age and the rate of diameter change.

BEST MODE FOR CARRYING OUT THE INVENTION

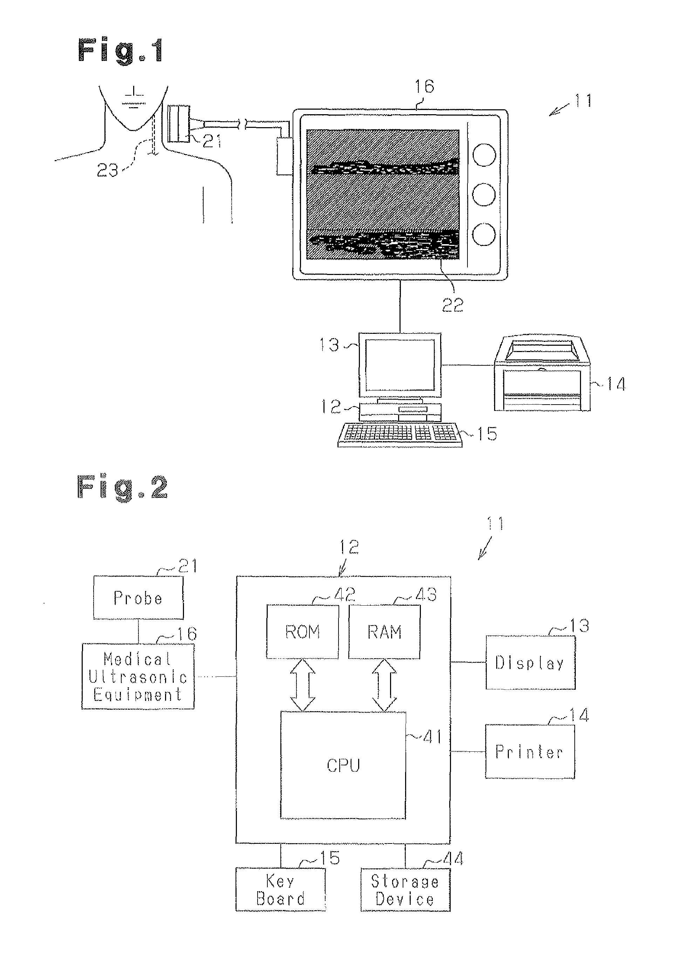

Hereafter, an image processing device according to one embodiment of the present invention will be described with reference to Figs. 1 to 10. As shown in Fig. 1, an image processing device 11 of the present embodiment includes a computer 12, a display 13, a printer 14, and a key board 15, and is connected to ultrasonic diagnostic equipment 16. The computer 12 makes up first modeling means, second modeling means, output means, and storage means.

The ultrasonic diagnostic equipment 16 includes a probe 21, a display part 22, and an ultrasonic generator that is not shown. The ultrasonic diagnostic equipment 16 transmits a pulse wave from the tip end surface of the probe 21 into a living body and receives a reflected wave (echo signal) from a carotid artery 23. In the ultrasonic diagnostic equipment 16, the tip end surface of the probe 21 is formed into a rectangular shape, and an echo moving image (that is, a B-mode image) including a longitudinal sectional shape of the carotid artery 23 acquired in B-mode based on the echo signal. This echo moving image corresponds to an ultrasound B-mode image sequence. In the display part 22 of the ultrasonic diagnostic equipment 16, a moving image is displayed that shows the carotid artery 23 of the subject as being expanded, contracted, or deformed.

The B-mode image is outputted from a video output of the ultrasonic diagnostic equipment 16, and video captured at a predetermined resolution (m × n pixels) and a predetermined number of frames/second by a DV converter not shown, thereafter being inputted to the computer 12 as an IEEE 1394 signal. Although, in the present embodiment, the predetermined number of frames/second is set to be 30 frames/second, this value is not particularly limited and may be any value as long as it allows clear observation of change of heartbeat in the carotid artery.

The number of pixels of an ultrasound image region displayed on the display 13 is represented by Nx in the horizontal direction and Ny in the vertical direction. Although, in the present embodiment, Nx is set as Nx = 540 (pixels), and Ny is set as Ny = 420 (pixels), these numerical values are not limited.

As shown in Fig. 2, an echo moving image acquired by the ultrasonic diagnostic equipment 16 is input to the computer 12, and stored in a storage device 44 incorporated in the computer 12. The storage device 44, which is made up of, for example, a hard disk or a semiconductor storage device, can read and write the above-described various information.

The computer 12, which includes a CPU 41 (Central Processing Unit), a ROM 42, and a RAM 43, runs an image processing program stored in the ROM 42, which is a storage medium. The RAM 43 is a working memory when the above-described program is executed.

(Operation of embodiment)

Next, description will be provided of the steps of an image processing program to be executed by the CPU 41 in the image processing device 11, which is configured as described above. First, before the description of the program is provided, the "formulation of the identification problem of the carotid artery" and the "estimation of the position and shape of the carotid artery" will be described.

(Formulation of identification problem of carotid artery)

Problems when identifying the carotid artery in the present embodiment will be described. In the present embodiment, erroneous estimation in which muscles, tendons, and veins that have similar shapes to that of the carotid artery wall are mistaken for the carotid artery wall is avoided by modeling the shape of the entire carotid artery rather than detecting the carotid artery by itself. Further, in order to efficiently track the movement of the carotid artery from a moving ultrasound image , there is an effective methodology that, from the second frame of the moving image, adaptively estimates the position and shape of the carotid artery by updating the estimation result of the position and shape of the carotid artery in an immediately previous frame. In the present embodiment, the estimation of the position and shape of the carotid artery is performed with the above described concept, based on the premise that an ultrasound B-mode image is used.

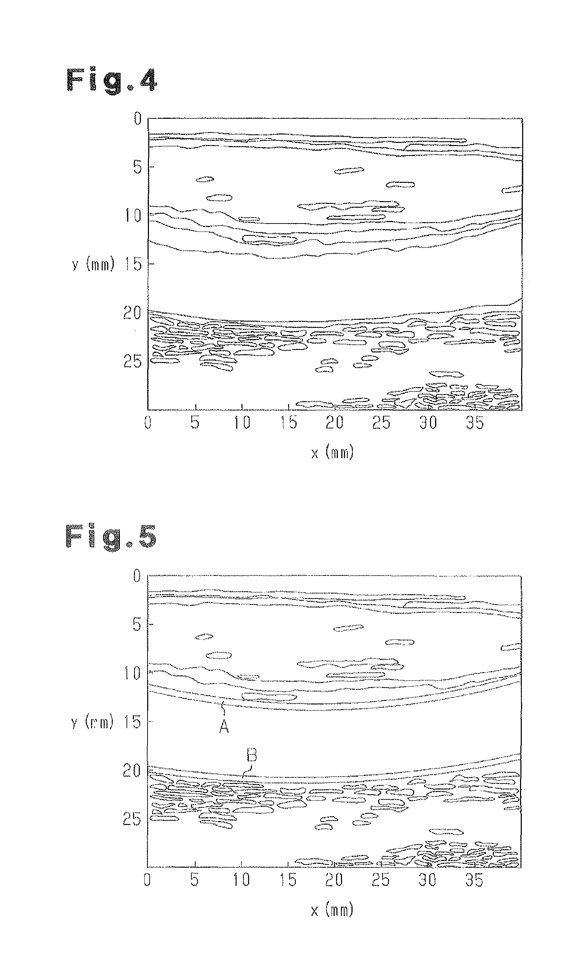

In the present application, an ultrasound B-mode image sequence acquired by the CPU 41 is represented by $I(x, y, t)$, where $x = 1,...,Nx$, $y = 1,...,Ny$, and $t = 1,...,Nt$. The reference character x represents the pixel number in the horizontal direction, y represents the pixel number in the vertical direction, and t represents the frame number, with the upper left point in the image being set as $x = 1$ and $y = 1$. Nx represents the total number of pixels in the horizontal direction, Ny represents the total number of pixels in the vertical direction, and Nt represents the total number of frames. When focus is placed on one ultrasound image, an ultrasound B-mode image sequence is represented simply as $I(x, y)$, $x = 1,...,Nx$, $y = 1,...,Ny$. An example of ultrasound image that captures a longitudinal section of a carotid artery is shown in Fig. 4. Two lines that extend in the left and right directions of Fig. 4 in the middle of Fig. 4 and are parallel with each other in the up and down directions represent the anterior wall and the posterior wall of carotid artery. Since blood vessel walls strongly reflect ultrasound, they are displayed in white in an ultrasound image. Moreover, besides the carotid artery, the presence of various organs such as muscles, tendons, and vein walls are recognizable. On the premise that such ultrasound B-mode image is used, the positions of the anterior wall and posterior wall of the carotid artery are identifiable in every frame.

The position y of the anterior wall of a carotid artery in the vertical direction is represented by fu(x) and the position y of the posterior wall of a carotid artery in the vertical direction is represented by fl(x), as a function of horizontal pixel numbers x = 1,...,Nx. In the present embodiment, the width of an ultrasound image is set to be about 40 (mm), and it is assumed that regarding the positions of the anterior and posterior walls, the following assumptions hold.

(1) fu(x) and fl(x) are parallel with each other.

That is, with the diameter of a carotid artery being represented by D, fu(x) is represented as fu(x) = f(x) - D/2 and fl(x) as fl(x) = f(x) + D/2 using an appropriate function f(x).

(2) f1 (x) and fu(x), that is, f(x) can be represented by a quadratic function.

Such assumptions hold to such an extent that there is no harm in the estimate of the position and shape of the carotid artery to be described from now on, if the measurement site is not at a carotid artery sinus that is a bulge at which the common carotid artery is separated into the inner and outer carotid arteries, and if the carotid artery has not been deformed due to severe arteriosclerosis.

Since, from these assumptions, f(x) can be represented by a quadratic function, it is represented by Equation (1) shown below.

$$f(x) = a_0 + a_1 x + a_2 x^2, 1 \le x \le N_x \qquad (1)$$

The position and shape of the carotid artery in one frame can be exactly represented by the coefficients $a_0$, $a_1$, $a_2$ of the quadratic function and the diameter D of the carotid artery. These parameters are collectively referred to as carotid artery parameters $\theta = (a_0, a_1, a_2, D)$. When an ultrasound B-mode image sequence is treated, since the value of the parameters $\theta$ of the carotid artery change in each frame, the carotid artery parameters are represented by $\theta(t)$ as a function of frame number t. After all, the problem of identifying the positions of the anterior wall and posterior wall of carotid artery for each frame leads to a problem in determining $\theta(t)$, t = 1,...,Nt.

(On estimating the position and shape of the carotid artery)

In the present embodiment, the problem described above is solved as described below so that the position and shape of the carotid artery are estimated.

If the widths (that is, thicknesses) of the anterior and posterior walls of the carotid artery are both represented by W, a set $B_u$ of pixels (x, y) representing the anterior wall of the carotid artery in an ultrasound B-mode image is represented by Equation (2) shown below, and a set $B_l$ of pixels (x, y) representing the posterior wall is represented by Equation (3) shown below.

$$B_u = \left\{ (x, y) \middle| f(x) - D/2 - W/2 \le y \le f(x) - D/2 + W/2, 1 \le x \le N_x \right\} \quad (2)$$

$$B_l = \left\{ (x, y) \middle| f(x) + D/2 - W/2 \le y \le f(x) + D/2 + W/2, 1 \le x \le N_x \right\} \quad (3)$$

Therefore, the entire carotid artery wall B is represented by Equation (4) shown below.

$$B = \left\{ B_u, B_l \right\} \qquad (4)$$

Further, a set T of pixels (x, y) representing the carotid artery lumen is represented by Equation (5) shown below.

$$T = \left\{ (x, y) \middle| f(x) - D/2 + W/2 < y < f(x) + D/2 - W/2, 1 \le x \le N_x \right\} \quad (5)$$

In an ultrasound B-mode image, a carotid artery wall is rendered in white due to a strong echo, and a carotid artery lumen is rendered in black due to a weak echo. That is, pixel values that are large in B represent a carotid artery wall, and are small in T that represent a carotid artery lumen. A pixel value means a pixel gray scale value. For a carotid artery parameters $\theta$ that provide a position and shape, an evaluation function $E(\theta)$ is introduced that is represented by Equation (6) shown below and represents the level of the probability of being a carotid artery.

$$E(\theta) = \frac{1}{|B|} \sum_{(x,y) \in B} I(x, y) - \alpha \frac{1}{|T|} \sum_{(x,y) \in T} I(x, y) - \beta g(D; D_{\min}, D_{\max}) \quad (6)$$

In Equation (6) shown above, each of $\alpha$, $\beta$ is a positive constant, and $|\cdot|$ represents the number of elements of the sets·. That is, $|B|$ represents the number of elements of the set B, and $|T|$ represents the number of elements of the set T. The first term of the right hand side of Equation (6) shown above becomes a larger value as the pixel value becomes larger, that is, the pixel becomes white at the position where the carotid artery wall is assumed, and the second term of the right hand side becomes a larger value as the pixel value becomes smaller, that is, the pixel becomes black at the position where the carotid artery lumen is assumed to be.

In the third term of the right hand side, g(D; $D_{\min}$, $D_{\max}$) is a function represented by Equation (7) shown below.

$$g(D; D_{\min}, D_{\max}) = \begin{cases} (D - D_{\min})^2, & D < D_{\min} \\ 0, & D_{\min} \le D \le D_{\max} \\ (D - D_{\max})^2, & D > D_{\max} \end{cases} \quad (7)$$

In Equation (7) shown above, $D_{\min}$ represents the minimum possible value for the human carotid artery diameter, $D_{\max}$ represents the maximum possible value for the human carotid artery diameter. The third term of the right hand side of Equation (6) shown above is a penalty term for a case that is out of the conceivable range for a human carotid artery diameter.

In the present embodiment, $D_{\min}$ is set as $D_{\min}$ = 5 (mm), and $D_{\max}$ is set as $D_{\max}$ = 12 (mm) from samples of ultrasound B-mode image that have been collected so far. These numerical values are not particularly limited, and may be changed, for example, according to the number of samples.

In Equation (6) shown above, as $\beta$, any positive number may be used as long as it is large enough not to generate a rounding error in calculations. Moreover, the value of $\alpha$ depends on specifications such as the ratio of echo intensities in the carotid artery wall and the carotid artery lumen, and image output of ultrasonic examination equipment. In the present embodiment, $\alpha$ = 2.0 is selected from a preliminary experiment.

If a weighting function w(x, y; $\theta$) is defined by Equation (8) shown below, the evaluation function $E(\theta)$ represented by Equation (6) shown above may also be represented by Equation (9) shown below.

$$w(x, y; \theta) = \begin{cases} \dfrac{1}{|B|}, (x, y) \in B \\ \alpha \dfrac{1}{|T|}, (x, y) \in T \\ 0, others \end{cases} \qquad (8)$$

$$E(\theta) = \sum_{x=1}^{N_x} \sum_{y=1}^{N_y} w(x, y; \theta) I(x, y) - \beta g(D; D_{\min}, D_{\max}) \qquad (9)$$

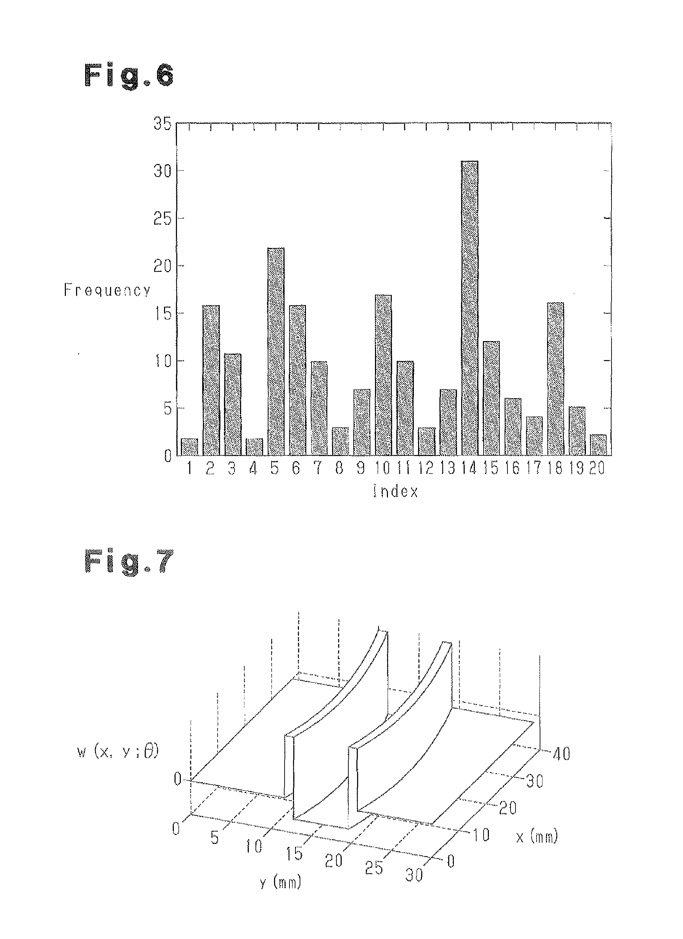

The first term of the right hand side of Equation (9) shown above corresponds to the inner product of the vectors of the model that has already been modeled regarding the longitudinal sectional shape of the carotid artery rendered in one frame, and of the model of the longitudinal sectional shape of the carotid artery rendered in the frame following the concerned frame. An example of this weighting function w(x, y; θ) is shown in Fig. 7.

The position and shape of the carotid artery in an ultrasound B-mode image I(x, y), that is, the value of the carotid artery parameters θ may be any value as long as the evaluation function E(θ) given by Equation (6) shown above is maximized.

Although the values of such parameters cannot be determined analytically, they may be determined by use of a non-linear optimization method such as the steepest-descent method, Newton's method, the conjugate gradient method, and the simplex method.

In a non-linear optimization method, parameters are updated so as to maximize an evaluation function based on an appropriately determined initial value; however, as seen from an ultrasound B-mode image shown in Fig. 4, there exist portions of a strong echo everywhere other than the carotid artery due to the existence of veins, fats, and tendons as well as tissue inhomogeneities.

There exist maximum values, that is, local solutions everywhere in this evaluation function. Therefore, preferably, an initial-value trial is performed in which a non-linear optimization method is applied to a plurality of different initial values, and the value among them that maximizes the evaluation function E(θ) is adopted as the final estimated value.

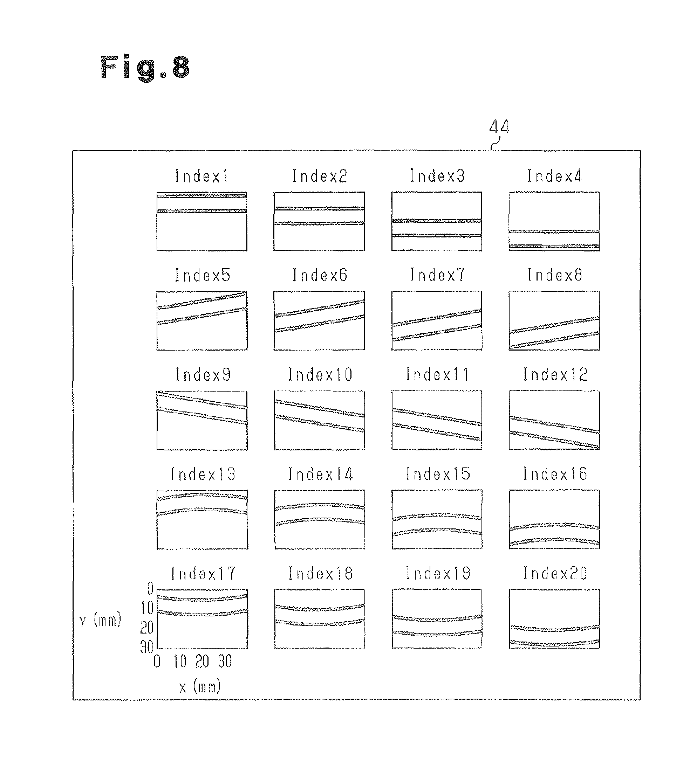

In the present embodiment, a certain number of samples of an ultrasound B-mode image that are acquired in advance are modeled by the method as described above, and the carotid artery parameters θ thereof are subjected to a cluster analysis to be used as the initial value data of the carotid artery parameters θ. Although, in the present embodiment, 20 data points are specified with Indexes (initial value number: Index) 1 to 20 given thereto as shown in Fig. 8, the quantity of initial value data is not limited to 20. The initial value data are recorded in a storage device 44 in advance.

As shown in Fig. 8, in the initial value data of Indexes 1 to 4, the anterior wall and posterior wall of the carotid artery extend in a linear fashion, being placed in parallel with each other in a horizontal state and located at different positions in the forward/rearward direction. In the present application, the direction approaching the skin to which the probe 21 is contacted is referred to as the forward direction, and the direction moving away from the skin is referred to as the rearward direction. In the initial value data of Indexes 5 to 8, the anterior wall and posterior wall of the carotid artery extend in a linear fashion, being placed in parallel with each other in a state of being inclined to the left and downward and located at different positions in the forward/rearward direction. In the initial value data of Indexes 9 to 12, the anterior wall and posterior wall of the carotid artery extend in an approximately linear fashion, being placed in parallel with each other in a state of being inclined to the right and downward and located at different positions in the forward/rearward direction. In the initial value data of Indexes 13 to 16, the anterior wall and posterior wall of the carotid artery extend in an arcuate shape protruding in the forward direction, being placed in parallel with each other and located at different positions in the forward/rearward direction. In the initial value data of Indexes 17 to 20, the anterior wall and posterior wall of the carotid artery extend in an arcuate shape protruding in the rearward direction, being placed in parallel with each other and located at different positions in the forward/rearward direction.

It has been confirmed that when a non-linear optimization method is applied to these initial value data in all the samples of ultrasound B-mode image, at least one of each of the samples converges to a true position of the carotid artery.

Fig. 6 shows the distribution of the number of samples that have converged from each initial value data to a true value. In Fig. 6, the numerical values of the horizontal axis correspond to Indexes shown in Fig. 8. From Figs. 6 and 8, it is seen that Indexes 2, 5, 6, 10, 14, and 18 are adopted at higher frequencies indicating that a larger number of carotid arteries have such positions and shapes.

Next, in the estimation of carotid artery parameters $\theta(t)$, t = 1,...,Nt for an ultrasound B-mode image sequence I(x, y, t), t = 1,...,Nt, the position and shape of the carotid artery do not significantly change between successive frames. For this reason, the initial value trial described above is performed only for an ultrasound image I(x ,y, 1) of the first frame of a moving image, and in and after the second frame, the estimated value of carotid artery parameters in an immediately previous frame is set as a sole initial value, and a non-linear optimization method is applied to the initial value. As a result of this, the position and shape of the carotid artery $\theta(t)$, t = 1,...,Nt for each frame are obtained.

(Processing of image processing program)

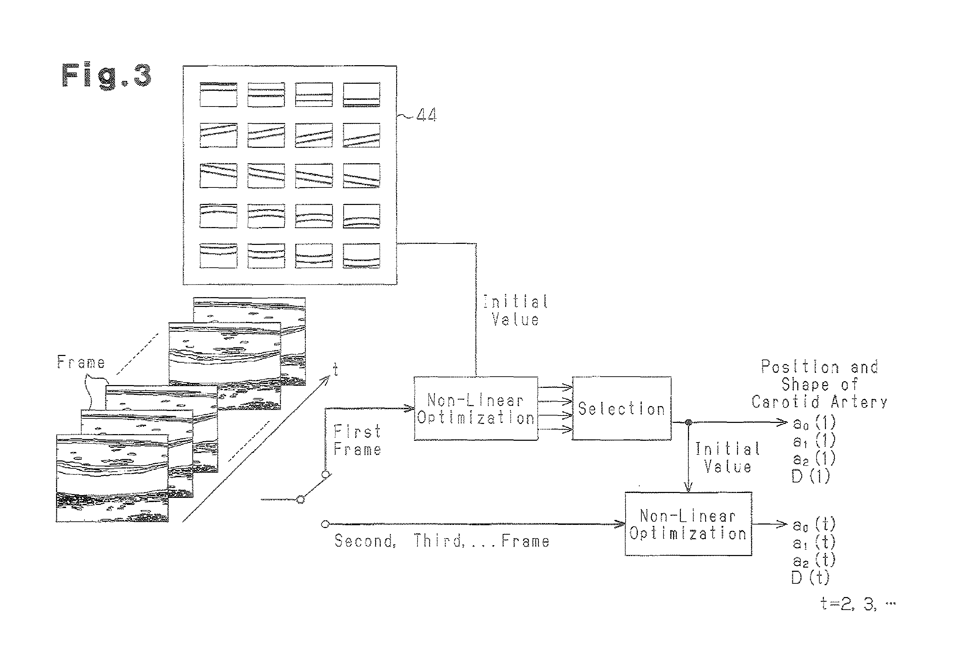

Next, the processing of an image processing program to be executed by the CPU 41 of the image processing device 11 will be described with reference to Fig. 3.

In the estimation of the position and shape of the carotid artery in the first frame (initial frame) of an echo moving image that is an acquired ultrasound B-mode image sequence, the CPU 41 of the image processing device 11 performs the initial value trial described above. That is, the CPU 41 starts learning from the positions and shapes of the carotid artery of 20 types described above and creates an evaluation function $E(\theta)$ that represents the level of the probability of the carotid artery shape so that the value that maximizes the evaluation function $E(\theta)$ is specified as the estimated value of the position and shape of the carotid artery.

In successive frames in a moving image, the position and shape of the carotid artery does not significantly change. Therefore, the CPU 41 adaptively learns from the position and shape of the carotid artery relating to the frame that has been estimated immediately therebefore. For example, in the second frame, learning is performed from the first frame, and an evaluation function $E(\theta)$ that represents the level of probability of the carotid artery shape is created in the second frame so that the value that maximizes the evaluation function $E(\theta)$ is specified as the estimated value for the position and shape of the carotid artery in that frame. Similarly in and after the second frame, learning is performed from the immediately previous frame, and an evaluation function $E(\theta)$ that represents the level of probability of the carotid artery shape is created so that the value that maximizes the evaluation function $E(\theta)$ is specified as the estimated value for the position and shape of the carotid artery in that frame.

In Fig. 3, $a_0(t)$, $a_1(t)$, $a_2(t)$ are parameters to represent the temporal change of the position and shape of the carotid artery represented by a quadratic function, and D(t) is a parameter to represent the temporal change of the carotid artery diameter.

Fig. 5 shows an example of the estimation of carotid artery parameters for an ultrasound B-mode image. In Fig. 5, reference characters A and B respectively show the anterior and posterior walls of the carotid artery, for which two quadratic curves are estimated.

Next, having completed the estimation of the position and shape of the carotid artery for all the frames of a moving image, the CPU 41 presents the variation of the carotid artery diameter in response to heartbeats, that is, a temporal change thereof in the form of a bar chart or a line graph, thereby displaying it on the display 13 or printing it via the printer 14.

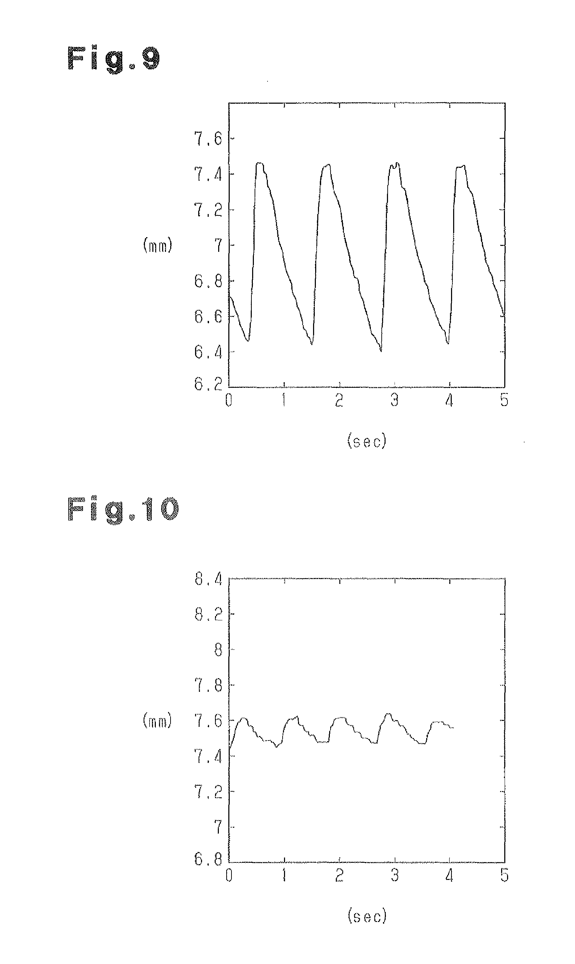

Fig. 9 shows an example in which a variation of the carotid artery diameter in response to heartbeats is displayed in the form of a line graph on the display 13. This example shows the variation of the carotid artery diameter for a 20-year-old male.

(Application to arteriosclerosis examination)

Now, the image processing device 11 configured as described above can be applied to arteriosclerosis examination.

Since the artery is formed of a viscoelastic material, an external force and the deformation of the artery are in a non-linear relationship. Because of this, as an indicator of arteriosclerosis to represent deformability, several kinds of measures have been proposed that present the hardness of the artery from the diameter change of the carotid artery in response to heartbeats. One of the most basic of them includes a pressure-strain elastic modulus $E_p$, which is represented by Equation (10) shown below and is defined as the ratio of the amount of blood pressure change and the rate of diameter change.

$$E_p = \frac{P_s - P_d}{\left(\dfrac{D_s - D_d}{D_d}\right)} \qquad (10)$$

In Equation (10) shown above, $P_s$ represents the systolic blood pressure (maximum blood pressure), $P_d$ represents the diastolic blood pressure (minimum blood pressure), $D_s$ represents the systolic carotid artery diameter (maximum diameter), and $D_d$ represents the diastolic carotid artery diameter (minimum diameter). When the blood vessel hardens, the rate of diameter change $(D_s - D_d)/D_d$ decreases with respect to the blood pressure change $(P_s - P_d)$, and therefore the pressure-strain elastic modulus $E_p$ increases.

Since the proposed pressure-strain elastic modulus $E_p$ overestimates the effect of blood pressure, a measure in which the blood pressure is taken as a logarithmic axis, and which is represented by Equation (11) shown below, that is, a modified stiffness parameter (β* has also been proposed.

$$\beta^* = \frac{\ln P_s - \ln P_d}{\left(\dfrac{D_s - D_d}{D_d}\right)} \qquad (11)$$

The stiffness parameter β, which has been proposed in an early stage, is defined by Equation (12) shown below, with a slope of the tangent between the logarithmic amount of blood pressure change at a blood pressure 100 (mHg) and the rate of diameter change, that is, $P_d$ being $P_d = 100$, $D_d$ being a blood vessel diameter at a blood pressure $P_d = 100$, and $D_s$ being the blood vessel diameter at a blood pressure $P_s$.

$$\beta = \lim_{P_s \to P_d} \beta^* \qquad (12)$$

When the blood pressure change $(P_s - P_d)$ can be represented by an exponential function of the rate of diameter change $(D_s - D_d)/D_d$, β and β* coincide. Further, Patent Document 1 proposes an elastic modulus $E_{th}$, which is represented by Equation (13) shown below and is equivalent to an elastic modulus in a tensile test, in which the blood pressure at rest and the rate of diameter change (strain) are described with a thick-wall cylinder model, and the thickness of blood vessel wall is corrected as d at a pressure-strain elastic modulus $E_p$.

$$E_{th} = E_P \frac{2(D_d - d/2)^2}{D_d^2 - (D_d - d/2)^2} \qquad (13)$$

Therefore, the diameter D of the carotid artery obtained by the image processing device 11 can be used for the calculation of the various measures that have been proposed.

(Relation between age and rate of diameter change of carotid artery)

Figs. 9 and 10 show an example of the temporal change of the carotid artery diameter that is estimated from an ultrasound B-mode image sequence that has captured the longitudinal section of the carotid artery for 4 to 5 seconds as described above. Fig. 9 shows the result of a 20-year-old male subject, and Fig. 10 shows the result of a 60-year-old male subject. It can be clearly seen that the diameter change in response to heartbeats is smaller in the 60-year-old male than in the 20-year-old male, indicating that the flexibility of the carotid artery has been lost.
Thus, it is seen in Figs. 9 and 10 that as arteriosclerosis progresses with age, the variation of the carotid artery diameter in response to heartbeats decreases.

Moreover, while various measures to represent the hardness of the artery have been proposed as described above, the part relating to the diameter change among those measures is a rate of diameter change $D_r$ represented by Equation (14) shown below.

$$D_r = \frac{D_s - D_d}{D_d} \qquad (14)$$

In order to demonstrate the applicability to arteriosclerosis diagnosis, a survey result of the relationship between the rate of diameter change $D_r$ and age Y will be described.

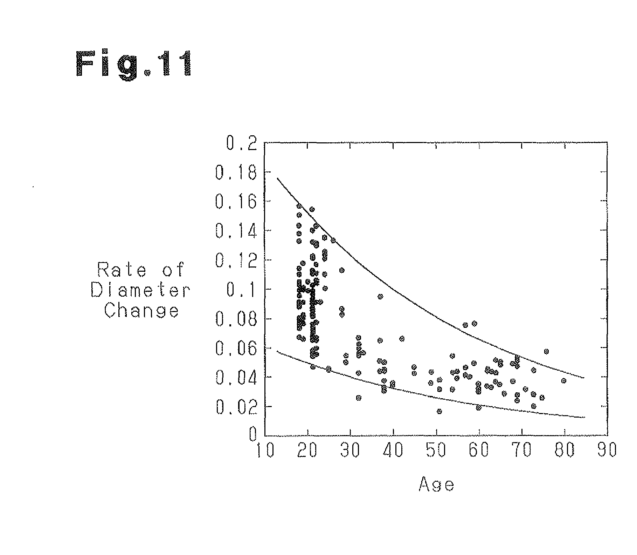

Fig. 11 shows a plot of the relationship between the age and the rate of diameter change by use of the image processing device 11 described above for 112 subjects. In Fig. 11, two curved lines indicate a 95% confidence interval. It is seen from the result shown in Fig. 11 that the rate of diameter change decreases with age, indicating progress of arteriosclerosis.

The present embodiment has the following advantages.

(1) The image processing device 11 according to the present embodiment includes the CPU 41 (first modeling means), which acquires an ultrasound B-mode image sequence made up of successive frames and successively models the longitudinal sectional shape of the carotid artery rendered in each frame with a model including carotid artery parameters which represent the position and shape of the carotid artery. Moreover, the image processing device 11 includes the CPU 41 (output means), which outputs the variation of the carotid artery diameter in response to heartbeats to the display 13 and the printer 14 based on the modeling result. The CPU 41 creates an evaluation function E(θ) of the model of the longitudinal sectional shape of the carotid artery, which is rendered in a frame following the frame that has already been modeled, and optimizes the evaluation function. Further, the CPU 41 estimates and models the position and shape of the longitudinal sectional shape of the carotid artery for the following frame based on the optimization result, thereafter performing the same operation for the following frames. That is, the optimization of the evaluation function E(θ) and the modeling of the position and shape of the longitudinal sectional shape of the carotid artery in the frame following the frame that has been modeled are successively performed in each successive frame.

As a result of this, modeling the shape of the entire carotid artery makes it possible to avoid erroneous estimation that muscles, tendons, and veins that have similar shapes to that of the carotid artery wall are mistaken for the carotid artery wall. Further, the present embodiment makes it possible to efficiently estimate the shape of the entire carotid artery. In addition, since an ultrasound B-mode image sequence can be used, it is possible to acquire images from medical ultrasonic diagnostic equipment in widespread use. Therefore, the image processing device 11 according to the present embodiment has a high versatility.

(2) The image processing device 11 according to the present embodiment includes a storage device 44 (storage means), which stores initial value data that are obtained by applying a cluster analysis to and modeling longitudinal sectional shapes of the carotid artery relating to a plurality of subjects. The CPU 41 of the image processing device 11 as the second modeling means, when acquiring an ultrasound B-mode image sequence made up of successive frames, creates an evaluation function E(θ) of the model of longitudinal sectional shape of the carotid artery, which is rendered in a first frame and optimizes the evaluation function, based on the initial value data. The CPU 41 estimates and models the position and shape of the longitudinal sectional shape of the carotid artery for the first frame based on the optimization result.

As a result of this, as the number of subjects increases, several different models are obtained as the initial value data when the cluster analysis is performed. For this reason, if the evaluation function E(θ) is optimized from these initial value data by the CPU 41, it can be expected that one of them will converge to a true carotid artery position, thus allowing the performance of efficient modeling of the first frame.

(3) In the image processing device 11 according to the present embodiment, the evaluation function E(θ) is the inner product of the vectors of the model, which has already been modeled regarding the longitudinal sectional shape of the carotid artery rendered in one frame, and of the model of longitudinal sectional shape of the carotid artery rendered in the frame following the concerned frame. As a result of this, it is possible to realize the effects of (1) shown above easily and effectively.

(4) The image processing program according to the present embodiment causes the computer 12 to function as the first modeling means and the output means. As a result of this, it is possible to avoid erroneous estimation in which muscles, tendons, and veins that have similar shapes to that of the carotid artery wall are mistaken for the carotid artery wall, and also to efficiently estimate the shape of the entire carotid artery. Further, since an ultrasound B-mode image sequence can be used, it is possible to acquire images from medical ultrasonic diagnostic equipment in widespread use. Therefore, the image processing program according to the present embodiment has high versatility.

(5) The image processing program according to the present invention causes the computer 12 to function as the storage means and the second modeling means. As a result of this, as the number of subjects increases, several different models are obtained as initial value data when the cluster analysis is performed. For this reason, if the evaluation function E(θ) is optimized from this initial value data by the CPU 41, it can be expected that one of them will converge to a true carotid artery position thus allowing the performance of efficient modeling of the first frame.

(6) In the image processing program according to the present embodiment, the evaluation function (θ) is the inner product of the vectors of the model that has already been modeled regarding the longitudinal sectional shape of the carotid artery rendered in one frame, and of the model of longitudinal sectional shape of the carotid artery rendered in the frame following the concerned frame. As a result of this, it is possible to achieve the advantages described above in (1) easily and effectively.

(7) The ROM 42 according to the present embodiment acts as a storage medium that stores the above-described image processing program. As a result, execution of the image processing program by the computer 12 makes it possible to avoid erroneous estimation in which muscles, tendons, and veins that have similar shapes to that of the carotid artery wall are mistaken for the carotid artery wall, and to efficiently estimate the shape of the entire carotid artery. Further, since an ultrasound B-mode image sequence can be used, it is possible to acquire images from medical ultrasonic diagnostic equipment in widespread use thereby easily achieving the various advantages described above.

(8) The ultrasonic diagnostic equipment according to the present embodiment is connected to the image processing device 11. Therefore, it is possible to easily achieve advantages described above in (1) and (2).

The above-described embodiment may be configured and modified as described below.

Although, in the above-described embodiment, the ROM 42 functions as the storage medium for storage the image processing program, the storage device 44 may function as the storage medium for storage the image processing program, or the image processing program is stored in storage medium such as a CD, DVD, or USB memory, so that the program is read and executed by a driver device that reads a storage medium such as CD and DVD.

Although, in the above-described embodiment, an assumption is made that "fl(x) and fu(x), that is, f(x) can be represented by a quadratic function", an assumption that "f(x) can be represented by a cubic function" may also be made.

The above-described analysis result of arteriosclerosis may be outputted from only one of the display 13 and the printer 14 or both.

### Claims

1. An image processing device, comprising:

   first modeling means for acquiring an ultrasound B-mode image sequence made up of successive frames, and successively modeling a longitudinal sectional shape of a carotid artery rendered in each frame with a model having carotid artery parameters that represent a position and shape of the carotid artery; and
   output means for outputting a variation of a carotid artery diameter in response to heartbeats based on the result of the modeling,
   the device being **characterized in that** the first modeling means creates an evaluation function for a model of the longitudinal sectional shape of the carotid artery rendered in a frame following the frame that has already been modeled, thereby optimizing the evaluation function, and based on the optimization result, estimates and models the position and shape of the longitudinal sectional shape of the carotid artery for said following frame, and performs the aforementioned operations for the subsequent frames as well.

2. The image processing device according to claim 1, **characterized by**:

   storage means for storing initial value data that is obtained by applying a cluster analysis to and modeling longitudinal sectional shapes of the carotid artery relating to a plurality of subjects; and
   second modeling means for, upon acquiring an ultrasound B-mode image sequence made up of successive frames, creating an evaluation function of the model of longitudinal sectional shape of the carotid artery rendered in a first frame, thereby optimizing the evaluation function based on the initial value data, and estimates and models the position and shape of the longitudinal sectional shape of the carotid artery for said first frame based on the optimization result.

3. An image processing program, **characterized by** causing a computer to function as:

   first modeling means, wherein, when acquiring an ultrasound B-mode image sequence made up of successive frames, and successively modeling longitudinal sectional shape of the carotid artery rendered in each frame with a model having carotid artery parameters representing a position and shape of the carotid artery, the first modeling means creating an evaluation function of a model of longitudinal sectional shape of the carotid artery rendered in a frame following the frame that has already been modeled, thereby optimizing the evaluation function, and based on the optimization result, estimates and models the position and shape of longitudinal sectional shape of the carotid artery for said following frame, and performing the aforementioned operations for the subsequent frames as well; and
   output means outputting a variation of carotid artery diameter in response to heartbeats based on the result of the modeling.

4. The image processing program according to claim 3, **characterized by** causing the computer to further function as:

   storage means for storing initial value data obtained by applying a cluster analysis to and modeling longitudinal sectional shapes of the carotid artery relating to a plurality of subjects; and
   second modeling means for, upon acquiring an ultrasound B-mode image sequence made up of successive frames, creating an evaluation function of the model of the longitudinal sectional shape of the carotid artery rendered in a first frame, thereby optimizing the evaluation function based on the initial value data, and estimates and models the position and shape of the longitudinal sectional shape of the carotid artery for said first frame based on the optimization result.

5. A storage medium, **characterized by** storing the image processing program according to claim 3 or 4.

6. Ultrasonic diagnostic equipment, **characterized by** being connected to the image processing device according to claim 1 or 2, wherein equipment creates an ultrasound B-mode image sequence measured from a living body based on an echo signal obtained by ultrasound transmission and reception of a probe, and outputs the ultrasound B-mode image sequence to the image processing device.

# Fig.1

# Fig.2

# Fig.3

~44

Frame

t

Initial
Value

First
Frame

Non-Linear
Optimization

Selection

Position and
Shape of
Carotid Artery

$a_0(1)$
$a_1(1)$
$a_2(1)$
$D(1)$

Initial
Value

Second, Third,...Frame

Non-Linear
Optimization

$a_0(t)$
$a_1(t)$
$a_2(t)$
$D(t)$

$t=2, 3, \cdots$

Fig.4

Fig.5

# Fig.6

# Fig.7

# Fig.8

44

Index1 Index2 Index3 Index4

Index5 Index6 Index7 Index8

Index9 Index10 Index11 Index12

Index13 Index14 Index15 Index16

Index17 Index18 Index19 Index20

y (mm)

0
10
20
30

0 10 20 30

x (mm)

## Fig.9

## Fig.10

# Fig.11

<table>
<tr><td colspan="3" align="center">**INTERNATIONAL SEARCH REPORT**</td><td colspan="2">International application No.<br>PCT/JP2008/054913</td></tr>
</table>

A.  CLASSIFICATION OF SUBJECT MATTER
*A61B8/08* (2006.01) i

According to International Patent Classification (IPC) or to both national classification and IPC

B.  FIELDS SEARCHED

Minimum documentation searched (classification system followed by classification symbols)
A61B8/08

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| A | JP 2889568 B1 (Masao ITO),<br>10 May, 1999 (10.05.99),<br>Par. No. [0031]<br>& US 6132373 A | 1-6 |
| A | WO 2005/034759 A1 (Osaka Industrial Promotion Organization),<br>21 April, 2005 (21.04.05),<br>Abstract<br>(Family: none) | 1-6 |
| A | JP 6-503483 A (University of Florida),<br>21 April, 1994 (21.04.94),<br>Page 5, upper right column, Summary of the Invention, lines 1 to 10<br>& US 5360006 A          & DE 69131798 T | 1-6 |

| ☒ | Further documents are listed in the continuation of Box C. | | ☐ | See patent family annex. |
|---|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>04 June, 2008 (04.06.08) | Date of mailing of the international search report<br>17 June, 2008 (17.06.08) |
|---|---|
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

International application No.

PCT/JP2008/054913

C (Continuation). DOCUMENTS CONSIDERED TO BE RELEVANT

| Category* | Citation of document, with indication, where appropriate, of the relevant passages | Relevant to claim No. |
|---|---|---|
| A | JP 2005-502139 A (Philips Corporate Intellectual Property GmbH), 20 January, 2005 (20.01.05), Abstract & US 2003/0056799 A & WO 2003/021532 A2 | 1-6 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3882084 B

**Non-patent literature cited in the description**

- **Koya Y. ; Mizoshiri I. ; Matsui K. ; Nakamura T.** Stiffness Measurement of Carotid Artery (in Japanese). *IEEJ (The Institute of Electrical Engineers of Japan) Transactions C,* 2003, vol. 123 (10), 1728-1734
- **Koya Y. ; Mizoshiri I.** Border Detection of Common Carotid Artery Using Gauss-Markov estimation (in Japanese). *IEEJ (The institute of Electrical Engineers of Japan) Transactions C,* 2004, vol. 124 (10), 2051-2056
- **Hasegawa H. ; Kanai H. ; Koiwa Y.** Detection of Lumen-Intima Interface of Posterior Wall for Measurement of Elasticity of the Human Carotid Artery. *IEEE Transactions on UFFC,* 2004, vol. 51 (1), 93-108
- **Harada A.** Measurement of Arteriosclerosis Indicator by Echo-tracking Method (in Japanese). *Japanese Journal of Medical Ultrasound Technology,* 2003, vol. 28 (3), 29-35